# EUROPEAN PATENT APPLICATION

(11) **EP 4 604 465 A1**
(43) Date of publication of application: **20.08.2025**
(21) Application number: 22961805.3
(22) Date of filing: 14.10.2022
(51) Int. Cl.: H04L 27/00, H04W 72/12

(54) **INFORMATION DETERMINATION METHOD/APPARATUS/DEVICE AND STORAGE MEDIUM**

(71) Applicant: Beijing Xiaomi Mobile Software Co., Ltd., Beijing 100085 (CN)
(72) Inventor: LI, Mingju, Beijing 100085 (CN)
(74) Representative: Gunzelmann, Rainer
(86) International application number: PCT/CN2022/125497
(87) International publication number: WO 2024/077619

(57) **Abstract**

The present disclosure provides an information determination method/apparatus/device, and a storage medium. The method comprises: determining a transmission configuration indicator state (TCI state) for uplink channel transmission and/or uplink signal transmission. The present disclosure provides a method for a terminal device to determine which TCI state is specifically used for uplink channel transmission and/or uplink signal transmission for a situation in which a network device indicates three or four TCI states, thereby improving transmission performance based on multi-TRP coherent joint transmission.

## Description

### TECHNICAL FIELD

The present disclosure relates to the field of communication technology, and more particularly to a method/apparatus/device for determining information and a storage medium.

### BACKGROUND

In a multiple-input multiple-output (MIMO) system, a coherent joint transmission (CJT) implemented by a plurality of transmission reception points (TRPs) with an ideal backhaul connection is introduced. Furthermore, currently, a single-TRP (S-TRP) situation has been considered for a unified transmission configuration indicator (TCI) state. Specifically, the unified TCI state means a same set of TCI states indicated for a plurality of channels/signals of one TRP, and the same set of TCI states may currently be indicated separately for an uplink and a downlink, that is, indicating a downlink (DL) TCI state and/or an uplink (UL) TCI state respectively, or may be indicated jointly for an uplink and a downlink, that is, indicating a joint TCI state. Furthermore, a terminal may perform a transmission of an uplink channel and/or an uplink signal based on the indicated joint TCI state.

In the related art, the MIMO system may currently support a CJT of up to 4 TRPs, and a network device may indicate 3 or 4 TCI states to the terminal. However, only a method of determining which TCI state is used for the transmission of the uplink channel and/or the uplink signal by the terminal device when the network device indicates 1 or 2 TCI states is discussed. Therefore, the method in the related art cannot be applied to a determination process of determining which TCI state is specifically used for the transmission of the uplink channel and/or the uplink signal by the terminal device in a scenario where the network device indicates 3 or 4 TCI states.

### SUMMARY

A method/apparatus/device for determining information and a storage medium are provided in the present disclosure, for a terminal to determine which joint TCI state is specifically used for a transmissions of an uplink channel and/or an uplink signal in a case where a network device indicates 3 or 4 TCI states.

In a first aspect, embodiments of the present disclosure provide a method for determining information, which is performed by a terminal and includes:
determining a transmission configuration indicator (TCI) state for an uplink channel transmission and/or an uplink signal transmission.

In the present disclosure, the terminal may determine the TCI state for the uplink channel transmission and/or the uplink signal transmission. In the method of the present disclosure, the method for determining information may be applied to a MIMO system that may currently support a CJT of up to 4 TRP/RRHs. It may be seen from this that the method of the present disclosure is mainly applied to a scenario of a CJT of 3 TRP/RRHs or a CJT of 4 TRP/RRHs, and of course, is also applied to a CJT of 2 TRP/RRHs. That is, the present disclosure provides a method for the terminal to determine which joint TCI state is specifically used for the uplink channel transmission and/or the uplink signal transmission for a situation where a network device indicates 3 or 4 TCI states, thereby improving a transmission performance of a multi-TRP based coherent joint transmission.

In a second aspect, embodiments of the present disclosure provide a method for determining information, which is performed by a network device and includes:
sending first indication information, in which the first indication information indicates at least one joint transmission configuration indicator (TCI) state.

In a third aspect, embodiments of the present disclosure provide a communication apparatus, which is configured in a terminal and includes:
a processing module configured to determine a transmission configuration indicator (TCI) state for an uplink channel transmission and/or an uplink signal transmission.

In a fourth aspect, embodiments of the present disclosure provide a communication apparatus, which is configured in a network device and includes:
a transceiving module configured to send first indication information, in which the first indication information indicates at least one joint transmission configuration indicator (TCI) state.

In a fifth aspect, embodiments of the present disclosure provide a communication apparatus, which includes a processor. When the processor invokes a computer program in a memory, the method according to the first aspect described above is implemented.

In a sixth aspect, embodiments of the present disclosure provide a communication apparatus, which includes a processor. When the processor invokes a computer program in a memory, the method according to the second aspect described above is implemented.

In a seventh aspect, embodiments of the present disclosure provide a communication apparatus, which includes a processor and a memory having stored therein a computer program. The processor is configured to execute the computer program stored in the memory, to cause the communication apparatus to implement the method according to the first aspect described above.

In an eighth aspect, embodiments of the present disclosure provide a communication apparatus, which includes a processor and a memory having stored therein a computer program. The processor is configured to execute the computer program stored in the memory, to cause the communication apparatus to implement the method according to the second aspect described above.

In a ninth aspect, embodiments of the present disclosure provide a communication apparatus, which includes a processor and an interface circuit. The interface circuit is configured to receive a code instruction and transmit the code instruction to the processor, and the processor is configured to run the code instruction to cause the apparatus to implement the method according to the first aspect described above.

In a tenth aspect, embodiments of the present disclosure provide a communication apparatus, which includes a processor and an interface circuit. The interface circuit is configured to receive a code instruction and transmit the code instruction to the processor, and the processor is configured to run the code instruction to cause the apparatus to implement the method according to the second aspect described above.

In an eleventh aspect, embodiments of the present disclosure provide a communication system, which includes the communication apparatus according to the third aspect and the communication apparatus according to the fourth aspect, or the communication apparatus according to the fifth aspect and the communication apparatus according to the sixth aspect, or the communication apparatus according to the seventh aspect and the communication apparatus according to the eighth aspect, or the communication apparatus according to the ninth aspect and the communication apparatus according to the tenth aspect.

In a twelfth aspect, embodiments of the present disclosure provide a computer-readable storage medium for storing instructions used by the above network device. The instructions, when executed, cause the terminal to implement the method according to any one of the first aspect to the second aspect described above.

In a thirteenth aspect, the present disclosure further provides a computer program product, which includes a computer program that, when run on a computer, causes the computer to implement the method according to any one of the first aspect to the second aspect described above.

In a fourteenth aspect, the present disclosure provides a chip system, which includes at least one processor and an interface, for supporting a network device to implement functions involved in the method according to any one of the first aspect to the second aspect, for example, determining or processing at least one of data or information involved in the above method. In a possible design, the chip system further includes a memory for storing computer programs and data of primary and secondary nodes. The chip system may include chips, or may include chips and other discrete devices.

In a fifteenth aspect, the present disclosure provides a computer program that, when run on a computer, causes the computer to implement the method according to any one of the first aspect to the second aspect described above.

### BRIEF DESCRIPTION OF THE DRAWINGS

The above and/or additional aspects and advantages of the present disclosure will become apparent and more readily appreciated from the following descriptions of embodiments made with reference to the accompanying drawings.
FIG. 1 is a schematic diagram of an architecture of a communication system according to an embodiment of the present disclosure.
FIG. 2 is a schematic flow chart of a method for determining information according to another embodiment of the present disclosure.
FIG. 3 is a schematic flow chart of a method for determining information according to yet another embodiment of the present disclosure.
FIG. 4 is a schematic flow chart of a method for determining information according to a further embodiment of the present disclosure.
FIG. 5 is a schematic flow chart of a method for determining information according to a further embodiment of the present disclosure.
FIG. 6 is a schematic flow chart of a method for determining information according to a further embodiment of the present disclosure.
FIG. 7 is a schematic flow chart of a method for determining information according to a further embodiment of the present disclosure.
FIG. 8 is a schematic flow chart of a method for determining information according to an embodiment of the present disclosure.
FIG. 9 is a schematic flow chart of a method for determining information according to another embodiment of the present disclosure.
FIGS. 10 is a schematic flow chart of a method for determining information according to yet another embodiment of the present disclosure.
FIG. 11 is a schematic flow chart of a method for determining information according to a further embodiment of the present disclosure.
FIG. 12 is a schematic flow chart of a method for determining information according to a further embodiment of the present disclosure.
FIG. 13a is a schematic flow chart of a method for determining information according to a further embodiment of the present disclosure.
FIG. 13b is a schematic flow chart of a method for determining information according to a further embodiment of the present disclosure.
FIG. 14 is a schematic flow chart of a method for determining information according to a further embodiment of the present disclosure.
FIG. 15 is a schematic flow chart of a method for determining information according to a further embodiment of the present disclosure.
FIG. 16 is a schematic flow chart of a method for determining information according to a further embodiment of the present disclosure.
FIG. 17 is a schematic flow chart of a method for determining information according to a further embodiment of the present disclosure.
FIG. 18 is a schematic flow chart of a method for determining information according to a further embodiment of the present disclosure.
FIG. 19 is a schematic flow chart of a method for determining information according to a further embodiment of the present disclosure.
FIG. 20 is a schematic flow chart of a method for determining information according to a further embodiment of the present disclosure.
FIG. 21 is a schematic block diagram of a communication apparatus according to a further embodiment of the present disclosure.
FIG. 22 is a schematic block diagram of a communication apparatus according to a further embodiment of the present disclosure.
FIG. 23 is a block diagram of a communication apparatus according to an embodiment of the present disclosure.
FIG. 24 is a schematic block diagram of a chip according to an embodiment of the present disclosure.

### DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with embodiments of the present disclosure. Instead, they are merely examples of devices and methods consistent with some aspects of embodiments of the present disclosure as recited in the appended claims.

Terms used herein in embodiments of the present disclosure are only for the purpose of describing specific embodiments, but should not be construed to limit embodiments of the present disclosure. As used in embodiments of the present disclosure and the appended claims, "a/an" and "the" in singular forms are intended to include plural forms, unless clearly indicated in the context otherwise. It should also be understood that, the term "and/or" used herein represents and contains any or all possible combinations of one or more associated listed items.

It should be understood that, although terms such as "first," "second" and "third" may be used in embodiments of the present disclosure for describing various information, these information should not be limited by these terms. These terms are only used for distinguishing information of the same type from each other. For example, first information may also be referred to as second information, and similarly, the second information may also be referred to as the first information, without departing from the scope of embodiments of the present disclosure. As used herein, the term "if" may be construed to mean "when" or "upon" or "in response to determining" depending on the context.

Embodiments of the present disclosure will be described in detail below, and examples of embodiments are illustrated in the drawings. The same or similar elements are denoted by like reference numerals throughout the descriptions. Embodiments described herein with reference to drawings are explanatory, serve to explain the present disclosure, and cannot be construed to limit embodiments of the present disclosure.

For ease of understanding, terms involved in the present disclosure are first introduced.

### 1. Unified transmission configuration indicator state (unified TCI state)

The unified TCI state includes a joint TCI state and/or a separate TCI state. The joint TCI state specifically includes a certain TCI state that is used for both uplink sending and downlink receiving, and the separate TCI state specifically includes a certain TCI state that is used for uplink sending or downlink receiving. The separate TCI state includes a DL TCI state and a UL TCI state. The DL TCI state is used for downlink reception and the UL TCI state is used for uplink sending.

### 2. Physical uplink control channel (PUCCH)

The PUCCH is configured to carry uplink control information, mainly carrying a scheduling request, a hybrid automatic repeat request (HARQ) acknowledgement (ACK)/negative acknowledgement (NACK), and channel state information (CSI) includes a channel quality indicator (CQI), a precoding matrix indicator (PMI), a level indicator (LI) and a rank indication (RI), etc.

### 3. Physical uplink shared channel (PUSCH)

The PUSCH is configured to carry uplink data.

In order to better understand a method for determining information disclosed in embodiments of the present disclosure, a communication system to which embodiments of the present disclosure are applicable is first described below.

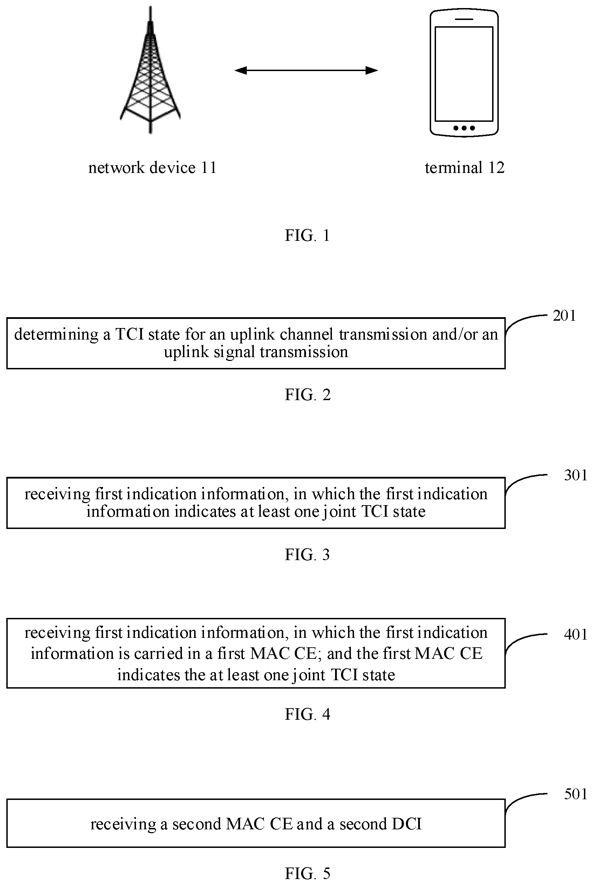

FIG. 1 is a schematic diagram of an architecture of a communication system according to an embodiment of the present disclosure. Referring to FIG. 1, the communication system may include, but is not limited to, one network device and one terminal. The number and forms of the devices shown in FIG. 1 are only as an example and do not constitute a limitation on embodiments of the present disclosure. The communication system may include two or more network devices and two or more terminals in practical applications. As an example for illustration, the communication system shown in FIG. 1 includes one network device 11 and one terminal 12.

It should be noted that the technical solutions of embodiments of the present disclosure may be applied to various communication systems, for example, a long term evolution (LTE) system, a 5th generation (5G) mobile communication system, a 5G new radio (NR) system, or other future new mobile communication systems.

The network device 11 in embodiments of the present disclosure is an entity on a network side for sending or receiving signals. For example, the network device 11 may be an evolved NodeB (eNB), a transmission reception point (TRP), a radio remote head (RRH), a next generation NodeB (gNB) in a NR system, a base station in other future mobile communication systems, or an access node in a wireless fidelity (Wi-Fi) system. The specific technology and specific device form adopted by the network device are not limited in embodiments of the present disclosure. The network device provided by embodiments of the present disclosure may be composed of a central unit (CU) and distributed units (DU). The CU may also be called a control unit. Using the CU-DU structure allows to split a protocol layer of the network device, such as the base station, so that some of functions of the protocol layer are centrally controlled in the CU, some or all of the remaining functions of the protocol layer are distributed in the DUs, and the CU centrally controls the DUs.

The terminal 12 in embodiments of the present disclosure is an entity on a user side for receiving or sending signals, such as a mobile phone. The terminal may also be called a terminal device, a user equipment (UE), a mobile station (MS), a mobile terminal (MT), and so on. The terminal may be a device with a communication function, such as a car, a smart car, a mobile phone, a wearable device, a tablet Pad, a computer with a wireless transceiving function, a virtual reality (VR) terminal, an augmented reality (AR) terminal, a wireless terminal in an industrial control, a wireless terminal in self-driving, a wireless terminal in a remote medical surgery, a wireless terminal in a smart grid, a wireless terminal in transportation safety, a wireless terminal in a smart city, a wireless terminal in a smart home, etc. The specific technology and the specific device form adopted by the terminal are not limited in embodiments of the present disclosure.

It may be understood that the communication system described in embodiments of the present disclosure is intended to illustrate the technical solutions of embodiments of the present disclosure more clearly, and does not constitute a limitation on the technical solutions provided by embodiments of the present disclosure. Those of ordinary skill in the art will know that with an evolution of a system architecture and an emergence of a new service scenario, the technical solutions provided by embodiments of the present disclosure are also applicable to similar technical problems.

A method/apparatus/device for determining information and a storage medium provided by embodiments of the present disclosure are described in detail below with reference to the accompanying drawings.

FIG. 2 is a schematic flow chart of a method for determining information according to an embodiment of the present disclosure. The method is performed by a terminal. As shown in FIG. 2, the method for determining the information may include the following steps.

In step 201, a transmission configuration indicator (TCI) state for an uplink channel transmission and/or an uplink signal transmission is determined.

The method of the present disclosure may be applied to a MIMO system that may support a CJT of up to 4 TRP/RRHs.

It should be noted that a CJT transmission in the present disclosure can be considered as a transmission including at least one of the following features.

Feature 1: A base station (i.e., a network device mentioned in the present disclosure) configures multiple (e.g., 1-4) non-zero-power channel state information reference signal (NZP CSI-RS) resources for the terminal as channel measurement resources (CMR), and SD basis vector (spatial domain basis vector) information independently fed back for each NZP CSI-RS resource by the terminal, such as a specified number L of beams are selected from a total number of antenna ports N1*N2 (where N1 is the number of antenna ports in a first dimension, and N2 is the number of antenna ports a the second dimension) of each NZP CSI-RS resource to feed back the spatial domain basis vector. A value of L may be the same or different for different NZP CSI-RS resources.

Feature 2: The terminal independently feeds back FD basis vector (frequency domain basis vector) information for each NZP CSI-RS, such as M frequency domain basis vectors are selected from N3 frequency domain basis vectors for each NZP CSI-RS resource. A value of N3 is a product of the number of channel quality indication subbands (CQI-subband) and the number of precoding matrix index subbands (PMI-subband) included in each CQI-subband (ie, numberofPMI-subbandperCQI-subband). A value of M may be the same or different for different NZP CSI-RS resources.

Feature 3: The terminal feeds back frequency domain basis vector information for each CMR, that is, for different NZP CSI-RS resources, M identical frequency domain basis vectors are selected from N3 frequency domain basis vectors.

Feature 4: multiple TRPs are included, each TRP corresponds to an NZP CSI-RS resource.

Feature 5: The number of transmitted TCI states is greater than or equal to 1.

In an embodiment of the present disclosure, the above uplink channel may include a PUSCH and/or a PUCCH. The uplink signal may include an SRS and/or a demodulation reference signal (DMRS).

The PUSCH may include at least one of:
Type 1 configured grant (CG Type 1) PUSCH; i.e., all transmission resources and parameters of the PUSCH are determined by radio resource control (RRC);
Type 2 configured grant (CG Type 2) PUSCH; i.e., part of the transmission resources and parameters of the PUSCH are determined by the RRC, and the other part of the transmission resources and parameters of the PUSCH is indicated by downlink control information (DCI);
DCI format 0_0 scheduled PUSCH; i.e., the transmission resources and parameters of the PUSCH are scheduled by DCI format 0_0;
DCI format 0_1 scheduled PUSCH; i.e., the transmission resources and parameters of the PUSCH are scheduled by DCI format 0_1; or
DCI format 0_2 scheduled PUSCH; i.e., the transmission resources and parameters of the PUSCH are scheduled by DCI format 0_2.

Further, in an embodiment of the present disclosure, determination of the TCI state for the uplink channel transmission and/or the uplink signal transmission by the terminal may be performed based on at least one of a default rule, a signaling sent by the network device, and the DCI for scheduling the uplink channel and/or the uplink signal. The detailed introduction of this part may be described in the subsequent embodiments.

In addition, in an embodiment of the present disclosure, the TCI state may include a path loss reference signal and/or uplink power control information, wherein a path loss reference signal identifier is used to indicate the path loss reference signal, and an uplink power control identifier is used to indicate the uplink power control information. Based on this, after the TCI state for the uplink channel transmission and/or the uplink signal transmission is determined, the path loss reference signal and/or the uplink power control information included in the determined TCI state may be used for uplink transmission.

To summarize, in the method for determining information provided by the present disclosure, the terminal may determine the TCI state for the uplink channel transmission and/or the uplink signal transmission. In the method of the present disclosure, the method for determining information may be applied to a MIMO system that may currently support a CJT of up to 4 TRP/RRHs. It may be seen from this that the method of the present disclosure is mainly applied to a scenario of a CJT of 3 TRP/RRHs or a CJT of 4 TRP/RRHs, and of course, is also applied to a CJT of 2 TRP/RRHs. That is, the present disclosure provides a method for the terminal to determine which joint TCI state is specifically used for the uplink channel transmission and/or the uplink signal transmission for a situation where a network device indicates 3 or 4 TCI states, thereby improving a transmission performance of a multi-TRP based coherent joint transmission.

FIG. 3 is a schematic flow chart of a method for determining information according to an embodiment of the present disclosure. The method is performed by a terminal. As shown in FIG. 3, the method for determining the information may include the following steps.

In step 301, first indication information is received, in which the first indication information indicates at least one joint TCI state.

In an embodiment of the present disclosure, the at least one joint TCI state indicated by the first indication information may be used for a physical downlink shared channel (PDSCH) transmission.

Furthermore, in an embodiment of the present disclosure, the joint TCI state may include quasi co-location type A (QCL Type A) and/or QCL Type B. The QCL Type A may include {an average delay, a delay spread, a Doppler shift, a Doppler spread}. The QCL Type B may include {a Doppler shift, a Doppler spread}.

In another embodiment of the present disclosure, the joint TCI state may include a quasi co-location type, and the quasi co-location type includes at least one of the following parameters:
an average delay;
a delay spread;
a Doppler shift; or
a Doppler spread.

In another embodiment of the present disclosure, the joint TCI state may also include a path loss reference signal identifier and/or an uplink power control identifier. The path loss reference signal identifier indicates a path loss reference signal, and the uplink power control identifier indicates uplink power control information.

To summarize, in the method for determining information provided by the present disclosure, the terminal may determine the TCI state for the uplink channel transmission and/or the uplink signal transmission. In the method of the present disclosure, the method for determining information may be applied to a MIMO system that may currently support a CJT of up to 4 TRP/RRHs. It may be seen from this that the method of the present disclosure is mainly applied to a scenario of a CJT of 3 TRP/RRHs or a CJT of 4 TRP/RRHs, and of course, is also applied to a CJT of 2 TRP/RRHs. That is, the present disclosure provides a method for the terminal to determine which joint TCI state is specifically used for the uplink channel transmission and/or the uplink signal transmission for a situation where a network device indicates 3 or 4 TCI states, thereby improving a transmission performance of a multi-TRP based coherent joint transmission.

FIG. 4 is a schematic flow chart of a method for determining information according to an embodiment of the present disclosure. The method is performed by a terminal. As shown in FIG. 4, the method for determining the information may include the following steps.

In step 401, first indication information is received. The first indication information is carried in a first medium access control control element (MAC CE), and the first MAC CE indicates the at least one joint TCI state.

In an embodiment of the present disclosure, the first MAC CE may indicate the at least one joint TCI state by indicating an ID of the joint TCI state.

Furthermore, in an embodiment of the present disclosure, a correspondence is present between TCI states and codepoints, and the at least one joint TCI state indicated by the first MAC CE corresponds to a same codepoint. An information field corresponding to the codepoint is carried in first downlink control information (DCI). For example, in an embodiment of the present disclosure, the information field corresponding to the codepoint may be a TCI field of the first DCI or other TCI fields of the first DCI, and the above "information field corresponding to the codepoint" may be understood as: an information field configured to carry the codepoint. Furthermore, it should be noted that, in embodiments of the present disclosure, in a case that the at least one joint TCI state indicated by the first MAC CE corresponds to the same codepoint, and the information field corresponding to the codepoint is carried in the first DCI, the first DCI may be sent to the terminal to indicate the codepoint to the terminal, or may not be sent to the terminal and not indicate the codepoint to the terminal.

For example, in an embodiment of the present disclosure, it is assumed that TCI states corresponding to codepoint "000" are: a joint TCI state with an ID of "2" and a joint TCI state with an ID of "3". The first MAC CE may indicate the joint TCI state with the ID of "2" and the joint TCI state with the ID of "3", and an information field that corresponds to the codepoint "000" corresponding to the joint TCI state with the ID of "2" and the joint TCI state with the ID of "3" is the TCI field of the first DCI.

To summarize, in the method for determining information provided by the present disclosure, the terminal may determine the TCI state for the uplink channel transmission and/or the uplink signal transmission. In the method of the present disclosure, the method for determining information may be applied to a MIMO system that may currently support a CJT of up to 4 TRP/RRHs. It may be seen from this that the method of the present disclosure is mainly applied to a scenario of a CJT of 3 TRP/RRHs or a CJT of 4 TRP/RRHs, and of course, is also applied to a CJT of 2 TRP/RRHs. That is, the present disclosure provides a method for the terminal to determine which joint TCI state is specifically used for the uplink channel transmission and/or the uplink signal transmission for a situation where a network device indicates 3 or 4 TCI states, thereby improving a transmission performance of a multi-TRP based coherent joint transmission.

FIG. 5 is a schematic flow chart of a method for determining information according to an embodiment of the present disclosure. The method is performed by a terminal. As shown in FIG. 5, the method for determining the information may include a following step.

In step 501, a second MAC CE and a second DCI are received.

In an embodiment of the present disclosure, the second MAC CE carries the above first indication information, the second MAC CE may indicate the at least one joint TCI state corresponding to a plurality of codepoints, respectively (namely, the at least one joint TCI state indicated by the second MAC CE corresponds to at least one codepoint), and the second DCI may indicate one codepoint of the plurality of codepoints. The second DCI may indicate the codepoint by using a TCI field.

In an embodiment of the present disclosure, the second MAC CE may indicate the at least one joint TCI state by indicating an ID of the joint TCI state.

For example, in an embodiment of the present disclosure, it is assumed that TCI states corresponding to codepoint "000" are: a joint TCI state with an ID of "2" and a joint TCI state with an ID of "3", and TCI states corresponding to codepoint "001" are: a joint TCI state with an ID of "4". The second MAC CE may indicate the joint TCI state with the ID of "2" and the joint TCI state with the ID of "3" corresponding to the codepoint "000", and the joint TCI state with the ID of "4" corresponding to the codepoint "001", and a TCI field of the second DCI may indicate the codepoint "000" or the codepoint "001".

To summarize, in the method for determining information provided by the present disclosure, the terminal may determine the TCI state for the uplink channel transmission and/or the uplink signal transmission. In the method of the present disclosure, the method for determining information may be applied to a MIMO system that may currently support a CJT of up to 4 TRP/RRHs. It may be seen from this that the method of the present disclosure is mainly applied to a scenario of a CJT of 3 TRP/RRHs or a CJT of 4 TRP/RRHs, and of course, is also applied to a CJT of 2 TRP/RRHs. That is, the present disclosure provides a method for the terminal to determine which joint TCI state is specifically used for the uplink channel transmission and/or the uplink signal transmission for a situation where a network device indicates 3 or 4 TCI states, thereby improving a transmission performance of a multi-TRP based coherent joint transmission.

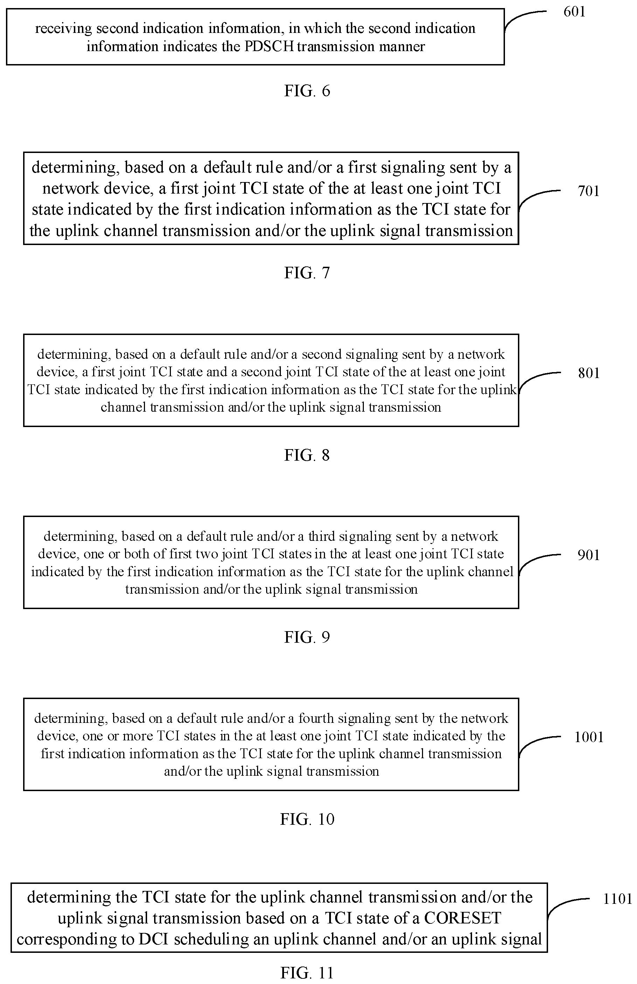

FIG. 6 is a schematic flow chart of a method for determining information according to an embodiment of the present disclosure. The method is performed by a terminal. As shown in FIG. 6, the method for determining the information may include a following step.

In step 601, second indication information is received, in which the second indication information indicates a PDSCH transmission manner.

In an embodiment of the present disclosure, the PDSCH transmission manner indicated by the second indication information may be CJT.

In an embodiment of the present disclosure, receiving the second indication information may include:
receiving second indication information carried in an RRC, in which the RRC is used to configure the PDSCH transmission manner.

In another embodiment of the present disclosure, receiving the second indication information may include:
receiving at least one of an RRC and a third MAC CE. The RRC carries the above second indication information, and the RRC is configured to configure the PDSCH transmission manner. The third MAC CE may indicate the joint TCI state corresponding to a PDSCH. Alternatively, in another embodiment of the present disclosure, the third MAC CE may indicate the at least one joint TCI state, the at least one joint TCI state indicated by the third MAC CE corresponds to a same codepoint, and an information field corresponding to the codepoint is included in a third DCI. In a case that the third MAC CE indicates the at least one joint TCI state, a structure of the third MAC CE is similar to a structure of the above first MAC CE, and a structural principle of the third DCI is similar to a structural principle of the above first DCI. Reference may be made to the above content for details.

It should be noted that, in an embodiment of the present disclosure, the joint TCI state corresponding to the above PDSCH may be specifically understood as: a joint TCI state used for a PDSCH transmission. Furthermore, the numeric count of the joint TCI states corresponding to the PDSCH may be greater than or equal to or less than a numeric count of the at least one joint TCI state indicated by the first indication information.

In another embodiment of the present disclosure, receiving the second indication information may include:
receiving an RRC and/or a fourth DCI.

In an embodiment of the present disclosure, the RRC carries the above second indication information, and the RRC is configured to configure the PDSCH transmission manner.

Furthermore, in an embodiment of the present disclosure, the fourth DCI may indicate joint TCI states corresponding to a PDSCH. Alternatively, in an embodiment of the present disclosure, the fourth DCI may indicate one codepoint, and the codepoint corresponds to one or more joint TCI states of the joint TCI states indicated by the first indication information. The fourth DCI may indicate the codepoint by using a TCI field or other information fields.

For example, it is assumed that the first indication information indicates a joint TCI state with an ID of "2" and a joint TCI state with an ID of "3", and the joint TCI state with the ID of "2" and the joint TCI state with the ID of "3" correspond to codepoint "000", then the fourth DCI may use the TCI field to indicate the codepoint "000". Alternatively, it is assumed that the first indication information indicates a joint TCI state with an ID of "2" and a joint TCI state with an ID of "3", the joint TCI state with the ID of "2" corresponds to codepoint "00", the joint TCI state with the ID of "3" corresponds to codepoint "01", and the joint TCI state with the ID of "2" and the joint TCI state with the ID of "3" correspond to codepoint "10", then the fourth DCI may use other information fields to indicate the codepoint "00" or "01" or "10". Alternatively, it is assumed that the first indication information indicates a joint TCI state with an ID of "2", a joint TCI state with an ID of "3", and a joint TCI state with an ID of "4", in which the joint TCI state with the ID of "2" and the joint TCI state with the ID of "3" correspond to codepoint "00", and the joint TCI state with the ID of "4" corresponds to codepoint "01", then the fourth DCI may use other information fields to indicate the codepoint "00" or the codepoint "01".

Alternatively, in an embodiment of the present disclosure, the fourth DCI may indicate one or more TCI states of the at least one joint TCI state indicated by the first indication information. Specifically, each joint TCI state indicated by the first indication information may correspond to 1 bit of the above fourth DCI information field. The bit is a predetermined value (such as '1'), then it indicates that the joint TCI state corresponding to this bit is used, otherwise it indicates that the joint TCI state corresponding to this bit is not used.

For example, it is assumed that the first indication information indicate a joint TCI state with an ID of "1" and a joint TCI state with an ID of "2", a joint TCI state with an ID of "3" and a joint TCI state with an ID of "4", and the joint TCI state with the ID of "1" corresponds to a first bit of other information field of the fourth DCI, the joint TCI state with the ID of "2" corresponds to a second bit of other information field, the joint TCI state with the ID of "3" corresponds to a third bit of other information field, the joint TCI state with the ID of "4" corresponds to a fourth bit of other information field, then in a case where other information field of the fourth DCI is 0001, it indicates that the joint TCI state with the ID of "4" is used; in a case where the other information field is 0101, it indicates that the joint TCI state with the ID of "2" and the joint TCI state with the ID of "4" are used; in a case where the other information field is 1111, it indicates that the joint TCI state with the ID of "1", the joint TCI state with the ID of "2", the joint TCI state with the ID of "3" and the joint TCI state with the ID of "4" are used.

In another embodiment of the present disclosure, receiving the second indication information may include:
receiving at least one of an RRC, a fourth MAC CE, and a fifth DCI.

In an embodiment of the present disclosure, the RRC carries the above second indication information, and the RRC is configured to configure the PDSCH transmission manner.

In an embodiment of the present disclosure, the fourth MAC CE may indicate at least one first value, and the first value is configured to indicate candidate joint TCI states corresponding to a PDSCH; and the fifth DCI indicates one codepoint, and the codepoint corresponds to one first value. Optionally, the first value corresponding to the codepoint may specifically be an actual joint TCI state corresponding to the PDSCH.

From the above content, it may be seen that a correspondence is present between the codepoint and the above first value. Furthermore, combined with the above content, it may be seen that a correspondence is also present between the codepoint and the TCI state. Based on this, in order to distinguish the two codepoints, in an embodiment of the present disclosure, the codepoint having the correspondence with the first value and the codepoint having the correspondence with the TCI state are indicated by different fields of the DCI (such as the first DCI to the fifth DCI mentioned above). For example, the codepoint having the correspondence with the TCI state is indicated by the TCI field of the DCI, and the codepoint having the correspondence with the first value is indicated by other fields of the DCI except the TCI field. Based on this, after receiving the DCI, the terminal may determine that the codepoint carried by the TCI field of the DCI corresponds to the TCI state, and that the codepoint carried by other fields of the DCI except the TCI field corresponds to the first value.

For example, it is assumed that the codepoint having the correspondence with the first value is indicated by a first field of the DCI except the TCI field, and the actual joint TCI state corresponding to the PDSCH is at least one joint TCI state of the joint TCI states indicated by the first indication information. The first indication information indicates joint TCI state combination 1, joint TCI state combination 2, joint TCI state combination 3..., the joint TCI state combination 1 indicated by the first indication information corresponds to codepoint "00", the combination 2 corresponds to codepoint "01", the combination 3 corresponds to codepoint "10"..., and the actual joint TCI state corresponding to the PDSCH is the combination 2. Then the fourth MAC CE may indicate the combinations 2, 3, 4, and a first field of the fifth DCI may indicate the codepoint "01".

Further, in another embodiment of the present disclosure, the above fourth MAC CE may indicate the at least one joint TCI state corresponding to a plurality of codepoints, respectively, and the fifth DCI may indicate one codepoint of the plurality of codepoints. A structure of the fourth MAC CE may be similar to a structure of the aforementioned second MAC CE, and a structure of the fifth DCI may be similar to a structure of the aforementioned second DCI. For a detailed introduction, reference may be made to the above description.

To summarize, in the method for determining information provided by the present disclosure, the terminal may determine the TCI state for the uplink channel transmission and/or the uplink signal transmission. In the method of the present disclosure, the method for determining information may be applied to a MIMO system that may currently support a CJT of up to 4 TRP/RRHs. It may be seen from this that the method of the present disclosure is mainly applied to a scenario of a CJT of 3 TRP/RRHs or a CJT of 4 TRP/RRHs, and of course, is also applied to a CJT of 2 TRP/RRHs. That is, the present disclosure provides a method for the terminal to determine which joint TCI state is specifically used for the uplink channel transmission and/or the uplink signal transmission for a situation where a network device indicates 3 or 4 TCI states, thereby improving a transmission performance of a multi-TRP based coherent joint transmission.

FIG. 7 is a schematic flow chart of a method for determining information according to an embodiment of the present disclosure. The method is performed by a terminal. As shown in FIG. 7, the method for determining the information may include a following step.

In step 701, a first joint TCI state of the at least one joint TCI state indicated by the first indication information as the TCI state for the uplink channel transmission and/or the uplink signal transmission is determined based on a default rule and/or a first signaling sent by a network device.

In an embodiment of the present disclosure, the first signaling may include at least one of:
RRC;
MAC CE; or
DCI.

Furthermore, in an embodiment of the present disclosure, the above first joint TCI state may be a first joint TCI state in all joint TCI states indicated by the first indication information. In other words, the first joint TCI state may be a TCI state indicated first among all joint TCI states indicated by the first indication information.

For example, it is assumed that the first indication information indicates in sequence a joint TCI state with an ID of "2", a joint TCI state with an ID of "3", and a joint TCI state with an ID of "4", and the joint TCI state with the ID of "2" is the first joint TCI state in all joint TCI states indicated by the first indication information, then the terminal device may determine the joint TCI state with the ID of "2" as the TCI state for the uplink channel transmission and/or the uplink signal transmission.

Alternatively, in another embodiment of the present disclosure, the above first joint TCI state may be a first joint TCI state in joint TCI states including target information among all joint TCI states indicated by the first indication information. The target information may include at least one of QCL Type A, QCL Type B, a path loss reference signal or uplink power control information.

For example, it is assumed that the target information is the QCL Type A, if the first indication information indicates in sequence a joint TCI state with an ID of "2", a joint TCI state with an ID of "3", and a joint TCI state with an ID of "4", the joint TCI state with the ID of "2" includes the QCL Type B, and the joint TCI state with the ID of "3" and the joint TCI state with the ID of "4" include the QCL Type A, then the joint TCI state with the ID of "3" is the first joint TCI state in TCI states including the QCL Type A among all joint TCI states indicated by the first indication information. Therefore, the terminal may determine the joint TCI state with the ID of "3" as the TCI state for the uplink channel transmission and/or the uplink signal transmission.

In addition, it should be noted that, in an embodiment of the present disclosure, the method of the FIG. 7 embodiment may be used to determine a TCI state for SRS transmission, a TCI state for PUSCH transmission of CG Type 1, or a TCI state for PUCCH transmission.

To summarize, in the method for determining information provided by the present disclosure, the terminal may determine the TCI state for the uplink channel transmission and/or the uplink signal transmission. In the method of the present disclosure, the method for determining information may be applied to a MIMO system that may currently support a CJT of up to 4 TRP/RRHs. It may be seen from this that the method of the present disclosure is mainly applied to a scenario of a CJT of 3 TRP/RRHs or a CJT of 4 TRP/RRHs, and of course, is also applied to a CJT of 2 TRP/RRHs. That is, the present disclosure provides a method for the terminal to determine which joint TCI state is specifically used for the uplink channel transmission and/or the uplink signal transmission for a situation where a network device indicates 3 or 4 TCI states, thereby improving a transmission performance of a multi-TRP based coherent joint transmission.

FIG. 8 is a schematic flow chart of a method for determining information according to an embodiment of the present disclosure. The method is performed by a terminal. As shown in FIG. 8, the method for determining the information may include a following step.

In step 801, a first joint TCI state and a second joint TCI state of the at least one joint TCI state indicated by the first indication information as the TCI state for the uplink channel transmission and/or the uplink signal transmission is determined based on a default rule and/or a second signaling sent by a network device.

In an embodiment of the present disclosure, the second signaling may include at least one of:
RRC;
MAC CE; or
DCI.

For the relevant introduction of the first joint TCI state, reference may be made to the description of the above embodiments.

In an embodiment of the present disclosure, the above second joint TCI state may be a second joint TCI state in all joint TCI states indicated by the first indication information. Alternatively, in another embodiment of the present disclosure, the above second joint TCI state may be a second joint TCI state in joint TCI states comprising target information among all joint TCI states indicated by the first indication information. The target information may include at least one of QCL Type A, QCL Type B, a path loss reference signal or uplink power control information. The relevant principles of the second joint TCI state may be similar to the relevant principles of the above first joint TCI state, and the embodiments of the present disclosure are not repeated herein.

In addition, it should be noted that, in an embodiment of the present disclosure, the method of the FIG. 8 embodiment may be used to determine a TCI state for transmission of DCI format 0_0 scheduled PUSCH, a TCI state for transmission of CG Type 1 PUSCH, or a TCI state for PUCCH transmission.

Furthermore, in an embodiment of the present disclosure, when it is to be determined the TCI state for a specific PUCCH transmission or a specific PUSCH transmission, the method of the FIG. 8 embodiment may also be used to determine the TCI state for the specific PUCCH transmission or the specific PUSCH transmission.

The specific PUCCH or the specific PUSCH may be: a PUCCH or a PUSCH configured with a transmission manner such as time-division multiplexing repetition (TDM repetition), single frequency network (SFN), space division multiplexing repetition (SDM repetition), or frequency division multiplexing repetition (FDM repetition); or
the specific PUCCH or the specific PUSCH may be: a PUCCH or a PUSCH configured with multiple SRS resource indicator fields, or multiple SRS resource set indication fields, or multiple path loss reference signal indication fields, or multiple power parameter indication fields, or multiple spatial filter indication fields.

The above TDM repetition may be understood as: two resources of repetitions may correspond to the same frequency domain resource, but correspond to different time domain resources, and correspond to different TCI states. The above SFN may be understood as: two resources of repetitions may correspond to the same time domain resource, the same frequency domain resource, and the same DMRS port, but correspond to different TCI states. The above SDM repetition may be understood as: two resources of repetitions may correspond to the same time domain resource and the same frequency domain resource, but correspond to different DMRS port groups and correspond to different TCI states. The above FDM repetition may be understood as: two resources of repetitions may correspond to the same time domain resource, but correspond to different frequency domain resources and correspond to different TCI states.

To summarize, in the method for determining information provided by the present disclosure, the terminal may determine the TCI state for the uplink channel transmission and/or the uplink signal transmission. In the method of the present disclosure, the method for determining information may be applied to a MIMO system that may currently support a CJT of up to 4 TRP/RRHs. It may be seen from this that the method of the present disclosure is mainly applied to a scenario of a CJT of 3 TRP/RRHs or a CJT of 4 TRP/RRHs, and of course, is also applied to a CJT of 2 TRP/RRHs. That is, the present disclosure provides a method for the terminal to determine which joint TCI state is specifically used for the uplink channel transmission and/or the uplink signal transmission for a situation where a network device indicates 3 or 4 TCI states, thereby improving a transmission performance of a multi-TRP based coherent joint transmission.

FIG. 9 is a schematic flow chart of a method for determining information according to an embodiment of the present disclosure. The method is performed by a terminal. As shown in FIG. 9, the method for determining the information may include a following step.

In step 901, one or both of first two joint TCI states in the at least one joint TCI state indicated by the first indication information as the TCI state for the uplink channel transmission and/or the uplink signal transmission is determined based on a default rule and/or a third signaling sent by a network device.

In an embodiment of the present disclosure, the third signaling may include at least one of:
RRC;
MAC CE; or
DCI.

In an embodiment of the present disclosure, the above first two joint TCI states may be first two joint TCI states in all joint TCI states indicated by the first indication information. Alternatively, in another embodiment of the present disclosure, the above first two joint TCI states may be first two joint TCI states in joint TCI states comprising target information among all joint TCI states indicated by the first indication information. The target information may include at least one of QCL Type A, QCL Type B, a path loss reference signal or uplink power control information. The relevant principles of the first two joint TCI states may be similar to the relevant principles of the above first joint TCI state, and the embodiments of the present disclosure are not repeated herein.

Further, in an embodiment of the present disclosure, the at least one joint TCI state indicated by the first indication information and/or a first joint TCI state, or a second joint TCI state, or the first joint TCI state and the second joint TCI state in the first two joint TCI states of the at least one joint TCI state may be determined as the TCI state for the uplink channel transmission and/or the uplink signal transmission.

In addition, it should be noted that, in an embodiment of the present disclosure, the method of the FIG. 9 embodiment may be used to determine a TCI state for transmission of DCI format 0_1 scheduled PUSCH, a TCI state for transmission of DCI format 0_2 scheduled PUSCH, a TCI state for transmission of CG Type 2 PUSCH, or a TCI state for PUCCH transmission.

Furthermore, in an embodiment of the present disclosure, when it is to be determined the TCI state for a specific PUCCH transmission or a specific PUSCH transmission, the method of the FIG. 9 embodiment may also be used to determine the TCI state for the specific PUCCH transmission or the specific PUSCH transmission.

The specific PUCCH or the specific PUSCH may be: a PUCCH or a PUSCH configured with a transmission manner such as time-division multiplexing repetition (TDM repetition), single frequency network (SFN), space division multiplexing repetition (SDM repetition), or frequency division multiplexing repetition (FDM repetition).

The above TDM repetition may be understood as: two resources of repetitions may correspond to the same frequency domain resource, but correspond to different time domain resources, and correspond to different TCI states. The above SFN may be understood as: two resources of repetitions may correspond to the same time domain resource, the same frequency domain resource, and the same DMRS port, but correspond to different TCI states. The above SDM repetition may be understood as: two resources of repetitions may correspond to the same time domain resource and the same frequency domain resource, but correspond to different DMRS port groups and correspond to different TCI states. The above FDM repetition may be understood as: two resources of repetitions may correspond to the same time domain resource, but correspond to different frequency domain resources and correspond to different TCI states.

To summarize, in the method for determining information provided by the present disclosure, the terminal may determine the TCI state for the uplink channel transmission and/or the uplink signal transmission. In the method of the present disclosure, the method for determining information may be applied to a MIMO system that may currently support a CJT of up to 4 TRP/RRHs. It may be seen from this that the method of the present disclosure is mainly applied to a scenario of a CJT of 3 TRP/RRHs or a CJT of 4 TRP/RRHs, and of course, is also applied to a CJT of 2 TRP/RRHs. That is, the present disclosure provides a method for the terminal to determine which joint TCI state is specifically used for the uplink channel transmission and/or the uplink signal transmission for a situation where a network device indicates 3 or 4 TCI states, thereby improving a transmission performance of a multi-TRP based coherent joint transmission.

FIG. 10 is a schematic flow chart of a method for determining information according to an embodiment of the present disclosure. The method is performed by a terminal. As shown in FIG. 10, the method for determining the information may include a following step.

In step 1001, one or more TCI states in the at least one joint TCI state indicated by the first indication information as the TCI state for the uplink channel transmission and/or the uplink signal transmission is determined based on a default rule and/or a fourth signaling sent by the network device.

In an embodiment of the present disclosure, the fourth signaling may include at least one of:
RRC;
MAC CE; or
DCI.

Further, in an embodiment of the present disclosure, the multiple TCI states may include 2 TCI states, or 3 TCI states, or 4 TCI states.

It should be noted that the method of this embodiment is different from the method of the embodiment corresponding to FIG. 9 in that: in this embodiment, not only one or two TCI states can be selected from a first TCI state and a second TCI state of the at least one joint TCI state indicated by the first indication information for the uplink channel transmission and/or the uplink signal transmission, but also one or two TCI states can be arbitrarily selected from a third TCI state and a fourth TCI state of the at least one joint TCI state indicated by the first indication information for the uplink channel transmission and/or the uplink signal transmission; while the method of the embodiment corresponding to FIG. 9 can only select one or two TCI states from the first two TCI states of the at least one joint TCI state indicated by the first indication information for the uplink channel transmission and/or the uplink signal transmission.

In addition, it should be noted that, in an embodiment of the present disclosure, the method of the FIG. 10 embodiment may be used to determine a TCI state for transmission of DCI format 0_1 scheduled PUSCH, a TCI state for transmission of DCI format 0_2 scheduled PUSCH, a TCI state for transmission of CG Type 2 PUSCH, or a TCI state for PUCCH transmission.

Furthermore, in an embodiment of the present disclosure, when it is to be determined the TCI state for a specific PUCCH transmission or a specific PUSCH transmission, the method of the FIG. 10 embodiment may also be used to determine the TCI state for the specific PUCCH transmission or the specific PUSCH transmission.

The specific PUCCH or the specific PUSCH may be: a PUCCH or a PUSCH configured with a transmission manner such as time-division multiplexing repetition (TDM repetition), single frequency network (SFN), space division multiplexing repetition (SDM repetition), or frequency division multiplexing repetition (FDM repetition).

The above TDM repetition may be understood as: two resources of repetitions may correspond to the same frequency domain resource, but correspond to different time domain resources, and correspond to different TCI states. The above SFN may be understood as: two resources of repetitions may correspond to the same time domain resource, the same frequency domain resource, and the same DMRS port, but correspond to different TCI states. The above SDM repetition may be understood as: two resources of repetitions may correspond to the same time domain resource and the same frequency domain resource, but correspond to different DMRS port groups and correspond to different TCI states. The above FDM repetition may be understood as: two resources of repetitions may correspond to the same time domain resource, but correspond to different frequency domain resources and correspond to different TCI states.

To summarize, in the method for determining information provided by the present disclosure, the terminal may determine the TCI state for the uplink channel transmission and/or the uplink signal transmission. In the method of the present disclosure, the method for determining information may be applied to a MIMO system that may currently support a CJT of up to 4 TRP/RRHs. It may be seen from this that the method of the present disclosure is mainly applied to a scenario of a CJT of 3 TRP/RRHs or a CJT of 4 TRP/RRHs, and of course, is also applied to a CJT of 2 TRP/RRHs. That is, the present disclosure provides a method for the terminal to determine which joint TCI state is specifically used for the uplink channel transmission and/or the uplink signal transmission for a situation where a network device indicates 3 or 4 TCI states, thereby improving a transmission performance of a multi-TRP based coherent joint transmission.

FIG. 11 is a schematic flow chart of a method for determining information according to an embodiment of the present disclosure. The method is performed by a terminal. As shown in FIG. 11, the method for determining the information may include a following step.

In step 1101, the TCI state for the uplink channel transmission and/or the uplink signal transmission is determined based on a TCI state of a control resource set (CORESET) corresponding to DCI scheduling an uplink channel and/or an uplink signal.

In an embodiment of the present disclosure, the method for determining the TCI state for the uplink channel transmission and/or the uplink signal transmission based on the TCI state of the CORESET corresponding to DCI scheduling the uplink channel and/or the uplink signal may include:
In response to the CORESET corresponding to the DCI scheduling the uplink channel and/or the uplink signal only corresponds to one TCI state, then the one TCI state is directly determined as the TCI state for the uplink channel transmission and/or the uplink signal transmission. In response to the CORESET corresponding to the DCI scheduling the uplink channel and/or the uplink signal corresponds to multiple TCI states, one TCI state or more than one TCI state or all TCI states of the multiple TCI states are determined as the TCI state for the uplink channel transmission and/or the uplink signal transmission.

In addition, in an embodiment of the present disclosure, the method of the embodiment of FIG. 11 may be applicable for determining the TCI state used for transmission of the uplink channel and/or the uplink signal scheduled by the DCI. However, it should be noted that, for the DCI format 0_0 scheduled PUSCH, since DCI format 0_0 is a fallback DCI, and includes fewer indication fields. Therefore, the DCI format 0_0 for scheduling the PUSCH does not have enough indication fields to indicate the TCI state, and the DCI format 0_0 for scheduling the PUSCH cannot indicate the TCI state. Therefore, when indicating the TCI state used for transmission of the DCI format 0_0 scheduled PUSCH, the TCI state is generally necessary to be indicated using other DCI or indicated using MAC CE or RRC, or determined based on the default rule or the TCI state of the CORESET corresponding to the DCI format 0_0.

To summarize, in the method for determining information provided by the present disclosure, the terminal may determine the TCI state for the uplink channel transmission and/or the uplink signal transmission. In the method of the present disclosure, the method for determining information may be applied to a MIMO system that may currently support a CJT of up to 4 TRP/RRHs. It may be seen from this that the method of the present disclosure is mainly applied to a scenario of a CJT of 3 TRP/RRHs or a CJT of 4 TRP/RRHs, and of course, is also applied to a CJT of 2 TRP/RRHs. That is, the present disclosure provides a method for the terminal to determine which joint TCI state is specifically used for the uplink channel transmission and/or the uplink signal transmission for a situation where a network device indicates 3 or 4 TCI states, thereby improving a transmission performance of a multi-TRP based coherent joint transmission.

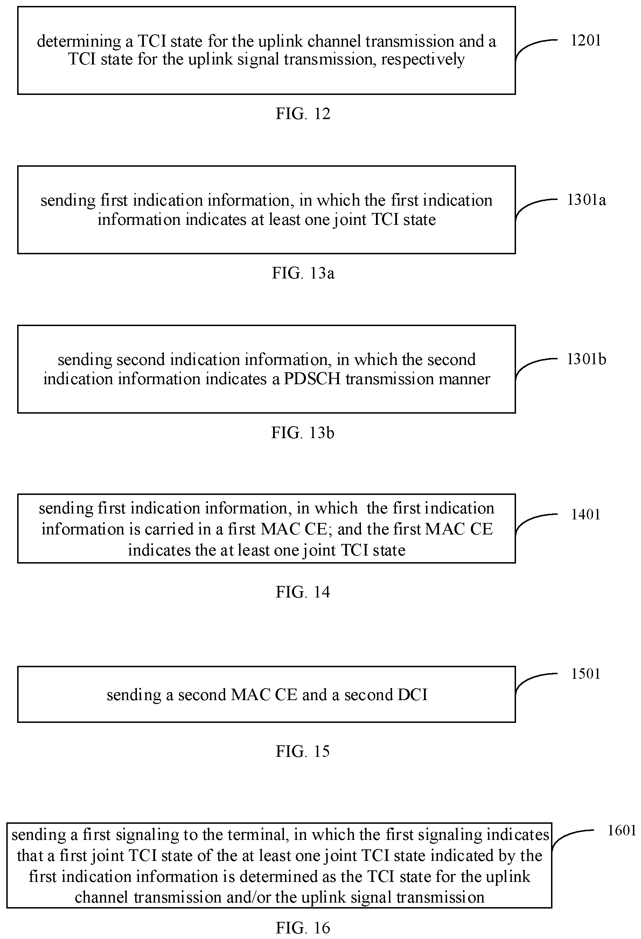

FIG. 12 is a schematic flow chart of a method for determining information according to an embodiment of the present disclosure. The method is performed by a terminal. As shown in FIG. 12, the method for determining the information may include a following step.

In step 1201, a TCI state for the uplink channel transmission and a TCI state for the uplink signal transmission are determined respectively.

Specifically, in an embodiment of the present disclosure, the TCI state for the uplink channel transmission may be determined separately, and the TCI state for the uplink signal transmission may be determined separately.

For example, based on the first signaling sent by the network device, the first joint TCI state of the at least one joint TCI state indicated by the first indication information may be determined as the TCI state for the uplink channel transmission, and based on the third signaling sent by the network device, the second joint TCI state of first two joint TCI states in the at least one joint TCI state indicated by the first indication information may be determined as the TCI state for the uplink signal transmission.

To summarize, in the method for determining information provided by the present disclosure, the terminal may determine the TCI state for the uplink channel transmission and/or the uplink signal transmission. In the method of the present disclosure, the method for determining information may be applied to a MIMO system that may currently support a CJT of up to 4 TRP/RRHs. It may be seen from this that the method of the present disclosure is mainly applied to a scenario of a CJT of 3 TRP/RRHs or a CJT of 4 TRP/RRHs, and of course, is also applied to a CJT of 2 TRP/RRHs. That is, the present disclosure provides a method for the terminal to determine which joint TCI state is specifically used for the uplink channel transmission and/or the uplink signal transmission for a situation where a network device indicates 3 or 4 TCI states, thereby improving a transmission performance of a multi-TRP based coherent joint transmission.

It should be noted that, in the first MAC CE, the second MAC CE, the third MAC CE, the fourth MAC CE, the MAC CE serving as the first signaling, the MAC CE serving as the second signaling, the MAC CE serving as the third signaling, and the MAC CE serving as the fourth signaling in the present disclosure, any two or more MAC CEs may be different MAC CEs, or the same MAC CE. Similarly, in the first DCI, the second DCI, the third DCI, the fourth DCI, the fifth DCI, the DCI serving as the first signaling, the DCI serving as the second signaling, the DCI serving as the third signaling, and the DCI serving as the fourth signaling in the present disclosure, any two or more DCIs may be different DCIs, or the same DCI. Furthermore, in the RRC carrying the configuration information, the RRC serving as the first signaling, the RRC serving as the second signaling, the RRC serving as the third signaling, and the RRC serving as the fourth signaling in the present disclosure, any two or more MAC CEs may be different RRCs, or the same RRC.

FIG. 13a is a schematic flow chart of a method for determining information according to an embodiment of the present disclosure. The method is performed by a network device. As shown in FIG. 13a, the method for determining the information may include a following step.

In step 1301a, first indication information is sent, in which the first indication information indicates at least one joint transmission configuration indicator (TCI) state.

For a detailed introduction of the step 1301a, reference may be made to the description of the above embodiments.

To summarize, in the method for determining the information provided by the present disclosure, the network device may send the first indication information to a terminal, in which the first indication information indicates the at least one joint TCI state; and the terminal may determine the TCI state used for the uplink channel transmission and/or the uplink signal transmission. In the method of the present disclosure, the method for determining information may be applied to a MIMO system that may currently support a CJT of up to 4 TRP/RRHs. It may be seen from this that the method of the present disclosure is mainly applied to a scenario of a CJT of 3 TRP/RRHs or a CJT of 4 TRP/RRHs, and of course, is also applied to a CJT of 2 TRP/RRHs. That is, the present disclosure provides a method for the terminal to determine which joint TCI state is specifically used for the uplink channel transmission and/or the uplink signal transmission for a situation where a network device indicates 3 or 4 TCI states, thereby improving a transmission performance of a multi-TRP based coherent joint transmission.

FIG. 13b is a schematic flow chart of a method for determining information according to an embodiment of the present disclosure. The method is performed by a network device. As shown in FIG. 13b, the method for determining the information may include a following step.

In step 1301b, second indication information is sent, in which the second indication information indicates a PDSCH transmission manner.

For a detailed introduction of the step 1301b, reference may be made to the description of the above embodiments.

To summarize, in the method for determining the information provided by the present disclosure, the network device may send the first indication information to a terminal, in which the first indication information indicates the at least one joint TCI state; and the terminal may determine the TCI state used for the uplink channel transmission and/or the uplink signal transmission. In the method of the present disclosure, the method for determining information may be applied to a MIMO system that may currently support a CJT of up to 4 TRP/RRHs. It may be seen from this that the method of the present disclosure is mainly applied to a scenario of a CJT of 3 TRP/RRHs or a CJT of 4 TRP/RRHs, and of course, is also applied to a CJT of 2 TRP/RRHs. That is, the present disclosure provides a method for the terminal to determine which joint TCI state is specifically used for the uplink channel transmission and/or the uplink signal transmission for a situation where a network device indicates 3 or 4 TCI states, thereby improving a transmission performance of a multi-TRP based coherent joint transmission.

FIG. 14 is a schematic flow chart of a method for determining information according to an embodiment of the present disclosure. The method is performed by a network device. As shown in FIG. 14, the method for determining the information may include a following step.

In step 1401, first indication information is sent. The first indication information is carried in a first medium access control control element (MAC CE); and the first MAC CE indicates the at least one joint TCI state.

For a detailed introduction of the step 1401, reference may be made to the description of the above embodiments.

To summarize, in the method for determining the information provided by the present disclosure, the network device may send the first indication information to a terminal, in which the first indication information indicates the at least one joint TCI state; and the terminal may determine the TCI state used for the uplink channel transmission and/or the uplink signal transmission. In the method of the present disclosure, the method for determining information may be applied to a MIMO system that may currently support a CJT of up to 4 TRP/RRHs. It may be seen from this that the method of the present disclosure is mainly applied to a scenario of a CJT of 3 TRP/RRHs or a CJT of 4 TRP/RRHs, and of course, is also applied to a CJT of 2 TRP/RRHs. That is, the present disclosure provides a method for the terminal to determine which joint TCI state is specifically used for the uplink channel transmission and/or the uplink signal transmission for a situation where a network device indicates 3 or 4 TCI states, thereby improving a transmission performance of a multi-TRP based coherent joint transmission.

FIG. 15 is a schematic flow chart of a method for determining information according to an embodiment of the present disclosure. The method is performed by a network device. As shown in FIG. 15, the method for determining the information may include a following step.

In step 1501, a second MAC CE and a second DCI are sent.

For a detailed introduction of the step 1501, reference may be made to the description of the above embodiments.

To summarize, in the method for determining the information provided by the present disclosure, the network device may send the first indication information to a terminal, in which the first indication information indicates the at least one joint TCI state; and the terminal may determine the TCI state used for the uplink channel transmission and/or the uplink signal transmission. In the method of the present disclosure, the method for determining information may be applied to a MIMO system that may currently support a CJT of up to 4 TRP/RRHs. It may be seen from this that the method of the present disclosure is mainly applied to a scenario of a CJT of 3 TRP/RRHs or a CJT of 4 TRP/RRHs, and of course, is also applied to a CJT of 2 TRP/RRHs. That is, the present disclosure provides a method for the terminal to determine which joint TCI state is specifically used for the uplink channel transmission and/or the uplink signal transmission for a situation where a network device indicates 3 or 4 TCI states, thereby improving a transmission performance of a multi-TRP based coherent joint transmission.

FIG. 16 is a schematic flow chart of a method for determining information according to an embodiment of the present disclosure. The method is performed by a network device. As shown in FIG. 16, the method for determining the information may include a following step.

In step 1601, a first signaling is sent to a terminal. The first signaling indicates that a first joint TCI state of the at least one joint TCI state indicated by the first indication information is determined as the TCI state for the uplink channel transmission and/or the uplink signal transmission.

For a detailed introduction of the step 1601, reference may be made to the description of the above embodiments.

To summarize, in the method for determining the information provided by the present disclosure, the network device may send the first indication information to a terminal, in which the first indication information indicates the at least one joint TCI state; and the terminal may determine the TCI state used for the uplink channel transmission and/or the uplink signal transmission. In the method of the present disclosure, the method for determining information may be applied to a MIMO system that may currently support a CJT of up to 4 TRP/RRHs. It may be seen from this that the method of the present disclosure is mainly applied to a scenario of a CJT of 3 TRP/RRHs or a CJT of 4 TRP/RRHs, and of course, is also applied to a CJT of 2 TRP/RRHs. That is, the present disclosure provides a method for the terminal to determine which joint TCI state is specifically used for the uplink channel transmission and/or the uplink signal transmission for a situation where a network device indicates 3 or 4 TCI states, thereby improving a transmission performance of a multi-TRP based coherent joint transmission.

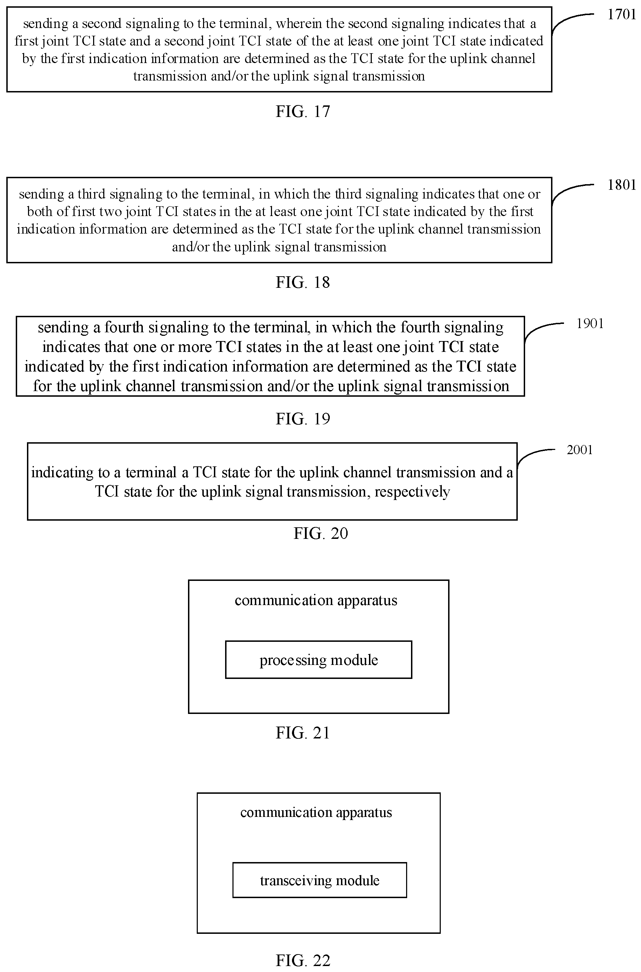

FIG. 17 is a schematic flow chart of a method for determining information according to an embodiment of the present disclosure. The method is performed by a network device. As shown in FIG. 17, the method for determining the information may include a following step.

In step 1701, a second signaling is sent to a terminal. The second signaling indicates that a first joint TCI state and a second joint TCI state of the at least one joint TCI state indicated by the first indication information are determined as the TCI state for the uplink channel transmission and/or the uplink signal transmission.

For a detailed introduction of the step 1701, reference may be made to the description of the above embodiments.

To summarize, in the method for determining the information provided by the present disclosure, the network device may send the first indication information to a terminal, in which the first indication information indicates the at least one joint TCI state; and the terminal may determine the TCI state used for the uplink channel transmission and/or the uplink signal transmission. In the method of the present disclosure, the method for determining information may be applied to a MIMO system that may currently support a CJT of up to 4 TRP/RRHs. It may be seen from this that the method of the present disclosure is mainly applied to a scenario of a CJT of 3 TRP/RRHs or a CJT of 4 TRP/RRHs, and of course, is also applied to a CJT of 2 TRP/RRHs. That is, the present disclosure provides a method for the terminal to determine which joint TCI state is specifically used for the uplink channel transmission and/or the uplink signal transmission for a situation where a network device indicates 3 or 4 TCI states, thereby improving a transmission performance of a multi-TRP based coherent joint transmission.

FIG. 18 is a schematic flow chart of a method for determining information according to an embodiment of the present disclosure. The method is performed by a network device. As shown in FIG. 18, the method for determining the information may include a following step.

In step 1801, a third signaling is sent to a terminal. The third signaling indicates that one or both of first two joint TCI states in the at least one joint TCI state indicated by the first indication information are determined as the TCI state for the uplink channel transmission and/or the uplink signal transmission.

For a detailed introduction of the step 1801, reference may be made to the description of the above embodiments.

To summarize, in the method for determining the information provided by the present disclosure, the network device may send the first indication information to a terminal, in which the first indication information indicates the at least one joint TCI state; and the terminal may determine the TCI state used for the uplink channel transmission and/or the uplink signal transmission. In the method of the present disclosure, the method for determining information may be applied to a MIMO system that may currently support a CJT of up to 4 TRP/RRHs. It may be seen from this that the method of the present disclosure is mainly applied to a scenario of a CJT of 3 TRP/RRHs or a CJT of 4 TRP/RRHs, and of course, is also applied to a CJT of 2 TRP/RRHs. That is, the present disclosure provides a method for the terminal to determine which joint TCI state is specifically used for the uplink channel transmission and/or the uplink signal transmission for a situation where a network device indicates 3 or 4 TCI states, thereby improving a transmission performance of a multi-TRP based coherent joint transmission.

FIG. 19 is a schematic flow chart of a method for determining information according to an embodiment of the present disclosure. The method is performed by a network device. As shown in FIG. 19, the method for determining the information may include a following step.

In step 1901, a fourth signaling is sent to a terminal. The fourth signaling indicates that one or more TCI states in the at least one joint TCI state indicated by the first indication information are determined as the TCI state for the uplink channel transmission and/or the uplink signal transmission.

For a detailed introduction of the step 1901, reference may be made to the description of the above embodiments.

To summarize, in the method for determining the information provided by the present disclosure, the network device may send the first indication information to a terminal, in which the first indication information indicates the at least one joint TCI state; and the terminal may determine the TCI state used for the uplink channel transmission and/or the uplink signal transmission. In the method of the present disclosure, the method for determining information may be applied to a MIMO system that may currently support a CJT of up to 4 TRP/RRHs. It may be seen from this that the method of the present disclosure is mainly applied to a scenario of a CJT of 3 TRP/RRHs or a CJT of 4 TRP/RRHs, and of course, is also applied to a CJT of 2 TRP/RRHs. That is, the present disclosure provides a method for the terminal to determine which joint TCI state is specifically used for the uplink channel transmission and/or the uplink signal transmission for a situation where a network device indicates 3 or 4 TCI states, thereby improving a transmission performance of a multi-TRP based coherent joint transmission.

FIG. 20 is a schematic flow chart of a method for determining information according to an embodiment of the present disclosure. The method is performed by a network device. As shown in FIG. 20, the method for determining the information may include a following step.

In step 2001, a TCI state for the uplink channel transmission and a TCI state for the uplink signal transmission are indicated to a terminal, respectively.

For a detailed introduction of the step 2001, reference may be made to the description of the above embodiments.

To summarize, in the method for determining the information provided by the present disclosure, the network device may send the first indication information to a terminal, in which the first indication information indicates the at least one joint TCI state; and the terminal may determine the TCI state used for the uplink channel transmission and/or the uplink signal transmission. In the method of the present disclosure, the method for determining information may be applied to a MIMO system that may currently support a CJT of up to 4 TRP/RRHs. It may be seen from this that the method of the present disclosure is mainly applied to a scenario of a CJT of 3 TRP/RRHs or a CJT of 4 TRP/RRHs, and of course, is also applied to a CJT of 2 TRP/RRHs. That is, the present disclosure provides a method for the terminal to determine which joint TCI state is specifically used for the uplink channel transmission and/or the uplink signal transmission for a situation where a network device indicates 3 or 4 TCI states, thereby improving a transmission performance of a multi-TRP based coherent joint transmission.

FIG. 21 is a schematic block diagram of a communication apparatus according to an embodiment of the present disclosure. As shown in FIG. 21, the apparatus may include:
a processing module configured to determine a transmission configuration indicator (TCI) state for an uplink channel transmission and/or an uplink signal transmission.

To summarize, in the communication apparatus provided by embodiments of the present disclosure, the terminal may determine the TCI state for the uplink channel transmission and/or the uplink signal transmission. In the method of the present disclosure, the method for determining information may be applied to a MIMO system that may currently support a CJT of up to 4 TRP/RRHs. It may be seen from this that the method of the present disclosure is mainly applied to a scenario of a CJT of 3 TRP/RRHs or a CJT of 4 TRP/RRHs, and of course, is also applied to a CJT of 2 TRP/RRHs. That is, the present disclosure provides a method for the terminal to determine which joint TCI state is specifically used for the uplink channel transmission and/or the uplink signal transmission for a situation where a network device indicates 3 or 4 TCI states, thereby improving a transmission performance of a multi-TRP based coherent joint transmission.

Optionally, in an embodiment of the present disclosure, the apparatus is further configured to:
receive first indication information, in which the first indication information indicates at least one joint TCI state.

Optionally, in an embodiment of the present disclosure, the first indication information is carried in a first medium access control control element (MAC CE); and the first MAC CE indicates the at least one joint TCI state.

Optionally, in an embodiment of the present disclosure, the at least one joint TCI state indicated by the first MAC CE correspond to a same codepoint, and an information field corresponding to the codepoint is included in first downlink control information (DCI).

Optionally, in an embodiment of the present disclosure, the first indication information is carried in a second MAC CE, and the second MAC CE indicates the at least one joint TCI state corresponding to a plurality of codepoints, respectively; and
the apparatus is further configured to:
receive a second DCI, in which the second DCI indicates one codepoint of the plurality of codepoints.

Optionally, in an embodiment of the present disclosure, the processing module is configured to perform at least one of:
determining, based on a default rule and/or a first signaling sent by a network device, a first joint TCI state of the at least one joint TCI state indicated by the first indication information as the TCI state for the uplink channel transmission and/or the uplink signal transmission;
determining, based on a default rule and/or a second signaling sent by a network device, a first joint TCI state and a second joint TCI state of the at least one joint TCI state indicated by the first indication information as the TCI state for the uplink channel transmission and/or the uplink signal transmission;
determining, based on a default rule and/or a third signaling sent by a network device, one or both of first two joint TCI states in the at least one joint TCI state indicated by the first indication information as the TCI state for the uplink channel transmission and/or the uplink signal transmission; or
determining, based on a default rule and/or a fourth signaling sent by the network device, one or more TCI states in the at least one joint TCI state indicated by the first indication information as the TCI state for the uplink channel transmission and/or the uplink signal transmission.

Optionally, in an embodiment of the present disclosure, the joint TCI state includes quasi co-location (QCL) Type A and/or QCL Type B.

Optionally, in an embodiment of the present disclosure, the joint TCI state includes a quasi co-location type, and the quasi co-location type includes at least one of following parameters:
an average delay;
a delay spread;
a Doppler shift; or
a Doppler spread.

Optionally, in an embodiment of the present disclosure, the first joint TCI state is a first joint TCI state in all joint TCI states indicated by the first indication information; or
the first joint TCI state is a first joint TCI state in joint TCI states comprising target information among all joint TCI states indicated by the first indication information.

Optionally, in an embodiment of the present disclosure, the second joint TCI state is a second joint TCI state in all joint TCI states indicated by the first indication information; or
the second joint TCI state is a second joint TCI state in joint TCI states comprising target information among all joint TCI states indicated by the first indication information.

Optionally, in an embodiment of the present disclosure, the first two joint TCI states are first two joint TCI states in all joint TCI states indicated by the first indication information; or
the first two joint TCI states are first two joint TCI states in joint TCI states comprising target information among all joint TCI states indicated by the first indication information.

Optionally, in an embodiment of the present disclosure, the target information includes at least one of QCL Type A, QCL Type B, a path loss reference signal or uplink power control information.

Optionally, in an embodiment of the present disclosure, the first signaling, the second signaling, the third signaling, or the fourth signaling includes at least one of:
radio resource control (RRC);
MAC CE; or
DCI.

Optionally, in an embodiment of the present disclosure, the processing module is configured to:
determine the TCI state for the uplink channel transmission and/or the uplink signal transmission based on a TCI state of a control resource set (CORESET) corresponding to DCI scheduling an uplink channel and/or an uplink signal.

Optionally, in an embodiment of the present disclosure, the processing module is configured to:
determine a TCI state for the uplink channel transmission and a TCI state for the uplink signal transmission, respectively.

Optionally, in an embodiment of the present disclosure, an uplink channel includes a physical uplink shared channel (PUSCH) and/or a physical uplink control channel (PUCCH);
an uplink signal includes a sounding reference signal (SRS) and/or a demodulation reference signal (DMRS).

Optionally, in an embodiment of the present disclosure, the PUSCH includes at least one of:
Type 1 configured grant (CG Type 1) PUSCH;
CG Type 2 PUSCH;
DCI format 0_0 scheduled PUSCH;
DCI format 0_1 scheduled PUSCH; or
DCI format 0_2 scheduled PUSCH.

Optionally, in an embodiment of the present disclosure, the TCI state includes a path loss reference signal and/or uplink power control information.

FIG. 22 is a schematic block diagram of a communication apparatus according to an embodiment of the present disclosure. As shown in FIG. 22, the apparatus may include:
a transceiving module configured to send first indication information. The first indication information indicates at least one joint transmission configuration indicator (TCI) state.

To summarize, in the communication apparatus provided by embodiments of the present disclosure, the network device may send the first indication information to a terminal, in which the first indication information indicates the at least one joint TCI state; and the terminal may determine the TCI state used for the uplink channel transmission and/or the uplink signal transmission. In the method of the present disclosure, the method for determining information may be applied to a MIMO system that may currently support a CJT of up to 4 TRP/RRHs. It may be seen from this that the method of the present disclosure is mainly applied to a scenario of a CJT of 3 TRP/RRHs or a CJT of 4 TRP/RRHs, and of course, is also applied to a CJT of 2 TRP/RRHs. That is, the present disclosure provides a method for the terminal to determine which joint TCI state is specifically used for the uplink channel transmission and/or the uplink signal transmission for a situation where a network device indicates 3 or 4 TCI states, thereby improving a transmission performance of a multi-TRP based coherent joint transmission.

Optionally, in an embodiment of the present disclosure, the first indication information is carried in a first medium access control control element (MAC CE); and the first MAC CE indicates the at least one joint TCI state.

Optionally, in an embodiment of the present disclosure, the at least one joint TCI state indicated by the first MAC CE correspond to a same codepoint, and an information field corresponding to the codepoint is included in first downlink control information (DCI).

Optionally, in an embodiment of the present disclosure, the first indication information is carried in a second MAC CE, wherein the second MAC CE indicates the at least one joint TCI state corresponding to a plurality of codepoints, respectively; and
the apparatus is further configured to:
send a second DCI, in which the second DCI indicates one codepoint of the plurality of codepoints.

Optionally, in an embodiment of the present disclosure, the apparatus is further configured to perform at least one of:
sending a first signaling to the terminal, in which the first signaling indicates that a first joint TCI state of the at least one joint TCI state indicated by the first indication information is determined as the TCI state for the uplink channel transmission and/or the uplink signal transmission;
sending a second signaling to the terminal, in which the second signaling indicates that a first joint TCI state and a second joint TCI state of the at least one joint TCI state indicated by the first indication information are determined as the TCI state for the uplink channel transmission and/or the uplink signal transmission;
sending a third signaling to the terminal, in which the third signaling indicates that one or both of first two joint TCI states in the at least one joint TCI state indicated by the first indication information are determined as the TCI state for the uplink channel transmission and/or the uplink signal transmission; or
sending a fourth signaling to the terminal, in which the fourth signaling indicates that one or more TCI states in the at least one joint TCI state indicated by the first indication information are determined as the TCI state for the uplink channel transmission and/or the uplink signal transmission.

Optionally, in an embodiment of the present disclosure, the joint TCI state includes quasi co-location (QCL) Type A and/or QCL Type B.

Optionally, in an embodiment of the present disclosure, the joint TCI state includes a quasi co-location type, and the quasi co-location type includes at least one of following parameters:
an average delay;
a delay spread;
a Doppler shift; or
a Doppler spread.

Optionally, in an embodiment of the present disclosure, the first joint TCI state is a first joint TCI state in all joint TCI states indicated by the first indication information; or
the first joint TCI state is a first joint TCI state in joint TCI states comprising target information among all joint TCI states indicated by the first indication information.

Optionally, in an embodiment of the present disclosure, the second joint TCI state is a second joint TCI state in all joint TCI states indicated by the first indication information; or
the second joint TCI state is a second joint TCI state in joint TCI states comprising target information among all joint TCI states indicated by the first indication information.

Optionally, in an embodiment of the present disclosure, the first two joint TCI states are first two joint TCI states in all joint TCI states indicated by the first indication information; or
the first two joint TCI states are first two joint TCI states in joint TCI states comprising target information among all joint TCI states indicated by the first indication information.

Optionally, in an embodiment of the present disclosure, the target information includes at least one of QCL Type A, QCL Type B, a path loss reference signal or uplink power control information.

Optionally, in an embodiment of the present disclosure, the first signaling, the second signaling, the third signaling, or the fourth signaling includes at least one of:
radio resource control (RRC);
MAC CE; or
DCI.

Optionally, in an embodiment of the present disclosure, the network device is configured to indicate to a terminal a TCI state for the uplink channel transmission and a TCI state for the uplink signal transmission, respectively.

Optionally, in an embodiment of the present disclosure, an uplink channel includes a physical uplink shared channel (PUSCH) and/or a physical uplink control channel (PUCCH);
an uplink signal includes a sounding reference signal (SRS) and/or a demodulation reference signal (DMRS).

Optionally, in an embodiment of the present disclosure, the PUSCH includes at least one of:
Type 1 configured grant (CG Type 1) PUSCH;
CG Type 2 PUSCH;
DCI format 0_0 scheduled PUSCH;
DCI format 0_1 scheduled PUSCH; or
DCI format 0_2 scheduled PUSCH.

Optionally, in an embodiment of the present disclosure, the TCI state includes a path loss reference signal and/or uplink power control information.

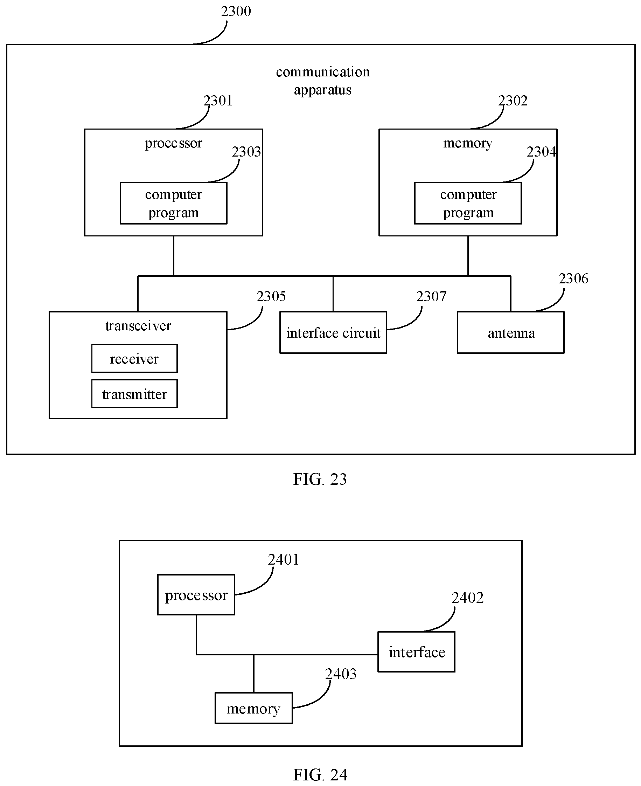

Referring to FIG. 23, FIG. 23 is a schematic block diagram of a communication apparatus 2300 according to an embodiment of the present disclosure, the communication apparatus 2300 may be a network device, may also be a terminal, may also be a chip, a chip system, or a processor that supports the network device to implement the above methods, and may also be a chip, a chip system, or a processor that supports the terminal to implement the above methods. The apparatus may be configured to implement the methods as described in the above method embodiments, and for details thereof, reference may be made to the descriptions in the above method embodiments.

The communication apparatus 2300 may include one or more processors 2301. The processor 2301 may be a general-purpose processor or a special-purpose processor. For example, the processor 2301 may be a baseband processor or a central processing unit. The baseband processor may be configured to process a communication protocol and communication data, and the central processing unit may be configured to control a communication apparatus (such as a base station, a baseband chip, the terminal, a terminal chip, a DU, a CU, or the like), execute computer programs, and process data of computer programs.

Optionally, the communication apparatus 2300 may further include one or more memories 2302 having stored therein a computer program 2304. The processor 2301 executes the computer program 2304, to cause the communication apparatus 2300 to implement the methods as described in the above method embodiments. Optionally, the memory 2302 may have stored therein data. The communication apparatus 2300 and the memory 2302 may be provided separately or integrated together.

Optionally, the communication apparatus 2300 may further include a transceiver 2305 and an antenna 2306. The transceiver 2305 may be called a transceiving element, a transceiving machine, a transceiving circuit or the like, for implementing a transceiving function. The transceiver 2305 may include a receiver and a transmitter. The receiver may be called a receiving machine, a receiving circuit or the like, for implementing a receiving function. The transmitter may be called a sending machine, a sending circuit or the like, for implementing a sending function.

Optionally, the communication apparatus 2300 may further include one or more interface circuits 2307. The interface circuit 2307 is configured to receive a code instruction and transmit the code instruction to the processor 2301. The processor 2301 runs the code instruction to enable the communication apparatus 2300 to execute the methods as described in the above method embodiments.

In an implementation, the processor 2301 may include the transceiver configured to implement receiving and sending functions. For example, the transceiver may be a transceiving circuit, an interface, or an interface circuit. The transceiving circuit, the interface or the interface circuit configured to implement the receiving and transmitting functions may be separated or may be integrated together. The above transceiving circuit, interface or interface circuit may be configured to read or write codes/data, or the above transceiving circuit, interface or interface circuit may be configured to transmit or transfer signals.

In an implementation, the processor 2301 may have stored therein a computer program 2303 that, when run on the processor 2301, causes the communication apparatus 2300 to implement the methods as described in the above method embodiments. The computer program 2303 may be embedded in the processor 2301, and in this case, the processor 2301 may be implemented by a hardware.

In an implementation, the communication apparatus 2300 may include a circuit, and the circuit may implement the transmitting, receiving or communicating function in the foregoing method embodiments. The processor and the transceiver described in the present disclosure may be implemented on an integrated circuit (IC), an analog IC, a radio frequency integrated circuit (RFIC), a mixed-signal IC, an application specific integrated circuit (ASIC), a printed circuit board (PCB), an electronic device, etc. The processor and the transceiver may also be manufactured using various IC process technologies, such as a complementary metal oxide semiconductor (CMOS), a negative metal-oxide-semiconductor (NMOS), a positive channel metal oxide semiconductor (PMOS), a bipolar junction transistor (BJT), a bipolar CMOS (BiCMOS), silicon germanium (SiGe), gallium arsenide (GaAs), etc.

The communication apparatus described in the above embodiments may be the network device or the terminal, but the scope of the communication apparatus described in the present disclosure is not limited thereto, and a structure of the communication apparatus is not limited by FIG. 23. The communication apparatus may be a stand-alone device or may be a part of a large device. For example, the communication apparatus may be:
(1) a stand-alone integrated circuit (IC), or a chip, or a chip system or subsystem;
(2) a set of one or more ICs, optionally, the set of ICs may also include a storage component for storing data and computer programs;
(3) an ASIC, such as a modem;
(4) a module that may be embedded in other devices;
(5) a receiver, a terminal, an intelligent terminal, a cellular phone, a wireless device, a handheld machine, a mobile unit, an on-board device, a network device, a cloud device, an artificial intelligence device, etc.;
(6) others.

For the case where the communication apparatus may be a chip or a chip system, reference may be made to a schematic block diagram of the chip shown in FIG. 24. The chip shown in FIG. 24 includes a processor 2401 and an interface 2402. In the chip, one or more processors 2401 may be provided, and more than one interface 2402 may be provided.

Optionally, the chip further includes a memory 2403 for storing necessary computer programs and data.

Those skilled in the art may also understand that various illustrative logical blocks and steps listed in embodiments of the present disclosure may be implemented by an electronic hardware, a computer software, or a combination thereof. Whether such functions are implemented by a hardware or a software depends on specific applications and design requirements of an overall system. For each specific application, those skilled in the art may use various methods to implement the described functions, but such an implementation should not be understood as extending beyond the protection scope of embodiments of the present disclosure.

The present disclosure further provides a readable storage medium having stored thereon instructions that, when executed by a computer, cause functions of any of the above method embodiments to be implemented.

The present disclosure further provides a computer program product that, when executed by a computer, causes functions of any of the above method embodiments to be implemented.

The above embodiments may be implemented in whole or in part by a software, a hardware, a firmware or any combination thereof. When implemented using the software, the above embodiments may be implemented in whole or in part in a form of the computer program product. The computer program product includes one or more computer programs. When the computer program is loaded and executed on the computer, all or some of the processes or functions according to embodiments of the present disclosure will be generated. The computer may be a general purpose computer, a special purpose computer, a computer network, or other programmable devices. The computer program may be stored in a computer-readable storage medium or transmitted from one computer-readable storage medium to another computer-readable storage medium. For example, the computer program may be transmitted from one website, computer, server or data center to another website, computer, server or data center in a wired manner (such as via a coaxial cable, an optical fiber, a digital subscriber line (DSL)) or a wireless manner (such as an infrared manner, a cordless manner, via microwave, or the like). The computer-readable storage medium may be any available medium that can be accessed by the computer, or a data storage device such as the server or the data center integrated with one or more available media. The available medium may be a magnetic medium (for example, a floppy disk, a hard disk, or a magnetic tape), an optical medium (for example, a high-density digital video disc (DVD)), a semiconductor medium (for example, a solid state disk (SSD)), or the like.

Those of ordinary skill in the art may understand that the first, second, and other numeral numbers involved in the present disclosure are distinguished only for convenience of description, and are not intended to limit the scope of embodiments of the present disclosure, and nor are they intended to represent a sequential order.

The term "at least one" used in the present disclosure may also be described as one or more, and the term "a plurality of' may cover two, three, four or more, which are not limited in the present disclosure. In embodiments of the present disclosure, for a certain kind of technical feature, the technical features in this kind of technical feature are distinguished by terms like "first", "second", "third", "A", "B", "C" and "D", etc., and these technical features described with the "first", "second", "third", "A", "B", "C" and "D" have no order of precedence or size.

The correspondence shown in each table in the present disclosure may be configured or predefined. The values of information in each table are just examples, and may be configured as other values, which are not limited in the present disclosure. When configuring a correspondence between the information and various parameters, it is not necessary to configure all the correspondences shown in the tables. For example, the correspondences shown in some rows of the tables in the present disclosure may not be configured. For another example, appropriate variations or adjustments (such as splitting, merging, and so on) may be made based on the above tables. The names of parameters shown in the titles of the above tables may also adopt other names understandable by the communication apparatus, and the values or representations of the parameters may also be other values or representations understandable by the communication apparatus. When the above tables are implemented, other data structures may also be used, for example, arrays, queues, containers, stacks, linear tables, pointers, linked lists, trees, graphs, structural bodies, classes, heaps, or hash tables may be used.

The term "predefinition" in the present disclosure may be understood as definition, pre-definition, storage, pre-storage, pre-negotiation, pre-configuration, curing, or pre-firing.

Those of ordinary skill in the art may appreciate that the units and algorithm steps of various examples described in conjunction with embodiments disclosed herein may be implemented by the electronic hardware, or a combination of the computer software and the electronic hardware. Whether these functions are executed by the hardware or the software depends on the specific applications and design constraints of the technical solution. For each particular application, those skilled in the art may use different methods to implement the described functions, but such an implementation should not be considered as extending beyond the scope of the present disclosure.

Those skilled in the art may clearly understand that for the convenience and brevity of the description, for the specific working process of the above-described system, device and unit, reference may be made to the corresponding process in the foregoing method embodiments, which will not be repeated here.

The above only describes some specific implementations of the present disclosure, but the protection scope of the present disclosure is not limited thereto. Any changes or substitutions that are conceivable to those skilled in the art within the technical scope of the present disclosure should fall within the protection scope of the present disclosure. Therefore, the protection scope of the present disclosure should be determined by the protection scope of the claims.

## Claims

1. A method for determining information, performed by a terminal, comprising:
determining a transmission configuration indicator (TCI) state for an uplink channel transmission and/or an uplink signal transmission.

2. The method according to claim 1, further comprising:
receiving first indication information, wherein the first indication information indicates at least one joint TCI state.

3. The method according to claim 2, wherein the first indication information is carried in a first medium access control control element (MAC CE); and the first MAC CE indicates the at least one joint TCI state.

4. The method according to claim 3, wherein the at least one joint TCI state indicated by the first MAC CE correspond to a same codepoint, and an information field corresponding to the codepoint is comprised in first downlink control information (DCI).

5. The method according to claim 2, wherein the first indication information is carried in a second MAC CE, wherein the second MAC CE indicates the at least one joint TCI state corresponding to a plurality of codepoints, respectively; and
the method further comprising:
receiving a second DCI, wherein the second DCI indicates one codepoint of the plurality of codepoints.

6. The method according to claim 2, wherein determining the TCI state for the uplink channel transmission and/or the uplink signal transmission comprises at least one of:
determining, based on a default rule and/or a first signaling sent by a network device, a first joint TCI state of the at least one joint TCI state indicated by the first indication information as the TCI state for the uplink channel transmission and/or the uplink signal transmission;
determining, based on a default rule and/or a second signaling sent by a network device, a first joint TCI state and a second joint TCI state of the at least one joint TCI state indicated by the first indication information as the TCI state for the uplink channel transmission and/or the uplink signal transmission;
determining, based on a default rule and/or a third signaling sent by a network device, one or both of first two joint TCI states in the at least one joint TCI state indicated by the first indication information as the TCI state for the uplink channel transmission and/or the uplink signal transmission; or
determining, based on a default rule and/or a fourth signaling sent by the network device, one or more TCI states in the at least one joint TCI state indicated by the first indication information as the TCI state for the uplink channel transmission and/or the uplink signal transmission.

7. The method according to claim 6, wherein the joint TCI state comprises quasi co-location (QCL) Type A and/or QCL Type B.

8. The method according to claim 6 or 7, wherein the joint TCI state comprises a quasi co-location type, and the quasi co-location type comprises at least one of following parameters:
an average delay;
a delay spread;
a Doppler shift; or
a Doppler spread.

9. The method according to claim 6, wherein the first joint TCI state is a first joint TCI state in all joint TCI states indicated by the first indication information; or
the first joint TCI state is a first joint TCI state in joint TCI states comprising target information among all joint TCI states indicated by the first indication information.

10. The method according to claim 6, wherein the second joint TCI state is a second joint TCI state in all joint TCI states indicated by the first indication information; or
the second joint TCI state is a second joint TCI state in joint TCI states comprising target information among all joint TCI states indicated by the first indication information.

11. The method according to claim 6, wherein the first two joint TCI states are first two joint TCI states in all joint TCI states indicated by the first indication information; or
the first two joint TCI states are first two joint TCI states in joint TCI states comprising target information among all joint TCI states indicated by the first indication information.

12. The method according to claim 9, 10 or 11, wherein the target information comprises at least one of QCL Type A, QCL Type B, a path loss reference signal or uplink power control information.

13. The method according to claim 6, wherein the first signaling, the second signaling, the third signaling, or the fourth signaling comprises at least one of:
radio resource control (RRC);
MAC CE; or
DCI.

14. The method according to claim 1, wherein determining the TCI state for the uplink channel transmission and/or the uplink signal transmission comprises:
determining the TCI state for the uplink channel transmission and/or the uplink signal transmission based on a TCI state of a control resource set (CORESET) corresponding to DCI scheduling an uplink channel and/or an uplink signal.

15. The method according to claim 1, wherein determining the TCI state for the uplink channel transmission and/or the uplink signal transmission comprises:
determining a TCI state for the uplink channel transmission and a TCI state for the uplink signal transmission, respectively.

16. The method according to any one of claims 1 to 15, wherein an uplink channel comprises a physical uplink shared channel (PUSCH) and/or a physical uplink control channel (PUCCH);
an uplink signal comprises a sounding reference signal (SRS) and/or a demodulation reference signal (DMRS).

17. The method according to claim 16, wherein the PUSCH comprises at least one of:
Type 1 configured grant (CG Type 1) PUSCH;
CG Type 2 PUSCH;
DCI format 0_0 scheduled PUSCH;
DCI format 0_1 scheduled PUSCH; or
DCI format 0_2 scheduled PUSCH.

18. The method according to claim 1, wherein the TCI state comprises a path loss reference signal and/or uplink power control information.

19. A method for determining information, performed by a network device, comprising:
sending first indication information, wherein the first indication information indicates at least one joint transmission configuration indicator (TCI) state.

20. The method according to claim 19, wherein the first indication information is carried in a first medium access control control element (MAC CE); and the first MAC CE indicates the at least one joint TCI state.

21. The method according to claim 20, wherein the at least one joint TCI state indicated by the first MAC CE correspond to a same codepoint, and an information field corresponding to the codepoint is comprised in first downlink control information (DCI).

22. The method according to claim 19, wherein the first indication information is carried in a second MAC CE, wherein the second MAC CE indicates the at least one joint TCI state corresponding to a plurality of codepoints, respectively; and
the method further comprising:
sending a second DCI, wherein the second DCI indicates one codepoint of the plurality of codepoints.

23. The method according to claim 19, further comprising at least one of:
sending a first signaling to the terminal, wherein the first signaling indicates that a first joint TCI state of the at least one joint TCI state indicated by the first indication information is determined as the TCI state for the uplink channel transmission and/or the uplink signal transmission;
sending a second signaling to the terminal, wherein the second signaling indicates that a first joint TCI state and a second joint TCI state of the at least one joint TCI state indicated by the first indication information are determined as the TCI state for the uplink channel transmission and/or the uplink signal transmission;
sending a third signaling to the terminal, wherein the third signaling indicates that one or both of first two joint TCI states in the at least one joint TCI state indicated by the first indication information are determined as the TCI state for the uplink channel transmission and/or the uplink signal transmission; or
sending a fourth signaling to the terminal, wherein the fourth signaling indicates that one or more TCI states in the at least one joint TCI state indicated by the first indication information are determined as the TCI state for the uplink channel transmission and/or the uplink signal transmission.

24. The method according to claim 23, wherein the joint TCI state comprises quasi co-location (QCL) Type A and/or QCL Type B.

25. The method according to claim 23 or 24, wherein the joint TCI state comprises a quasi co-location type, and the quasi co-location type comprises at least one of following parameters:
an average delay;
a delay spread;
a Doppler shift; or
a Doppler spread.

26. The method according to claim 23, wherein the first joint TCI state is a first joint TCI state in all joint TCI states indicated by the first indication information; or
the first joint TCI state is a first joint TCI state in joint TCI states comprising target information among all joint TCI states indicated by the first indication information.

27. The method according to claim 23, wherein the second joint TCI state is a second joint TCI state in all joint TCI states indicated by the first indication information; or
the second joint TCI state is a second joint TCI state in joint TCI states comprising target information among all joint TCI states indicated by the first indication information.

28. The method according to claim 23, wherein the first two joint TCI states are first two joint TCI states in all joint TCI states indicated by the first indication information; or
the first two joint TCI states are first two joint TCI states in joint TCI states comprising target information among all joint TCI states indicated by the first indication information.

29. The method according to claim 26, 27 or 28, wherein the target information comprises at least one of QCL Type A, QCL Type B, a path loss reference signal or uplink power control information.

30. The method according to claim 23, wherein the first signaling, the second signaling, the third signaling, or the fourth signaling comprises at least one of:
radio resource control (RRC);
MAC CE; or
DCI.

31. The method according to claim 19, wherein the network device is configured to indicate to a terminal a TCI state for the uplink channel transmission and a TCI state for the uplink signal transmission, respectively.

32. The method according to any one of claims 19 to 31, wherein an uplink channel comprises a physical uplink shared channel (PUSCH) and/or a physical uplink control channel (PUCCH);
an uplink signal comprises a sounding reference signal (SRS) and/or a demodulation reference signal (DMRS).

33. The method according to claim 32, wherein the PUSCH comprises at least one of:
Type 1 configured grant (CG Type 1) PUSCH;
CG Type 2 PUSCH;
DCI format 0_0 scheduled PUSCH;
DCI format 0_1 scheduled PUSCH; or
DCI format 0_2 scheduled PUSCH.

34. The method according to claim 19, wherein the TCI state comprises a path loss reference signal and/or uplink power control information.

35. A communication apparatus, configured in a terminal, comprising:
a processing module configured to determine a transmission configuration indicator (TCI) state for an uplink channel transmission and/or an uplink signal transmission.

36. A communication apparatus, configured in a network device, comprising:
a transceiving module configured to send first indication information, wherein the first indication information indicates at least one joint transmission configuration indicator (TCI) state.

37. A communication apparatus, comprising a processor and a memory having stored therein a computer program, wherein the processor, when executing the computer program stored in the memory, causes the apparatus to perform the method according to any one of claims 1 to 18, or the processor, when executing the computer program stored in the memory, causes the device to perform the method according to any one of claims 19 to 34.

38. A communication apparatus, comprising a processor and an interface circuit, wherein
the interface circuit is configured to receive code instructions and transmit the code instructions to the processor; and
the processor is configured to run the code instructions to perform the method according to any one of claims 1 to 18, or is configured to run the code instructions to perform the method according to any one of claims 19 to 34.

39. A computer-readable storage medium for storing instructions that, when executed, cause the method according to any one of claims 1 to 18 to be implemented, or when executed, cause the method according to any one of claims 19 to 34 to be implemented.
